# EUROPÄISCHE PATENTSCHRIFT

(11) **EP 3 241 660 B1**
(45) Veröffentlichungstag und Bekanntmachung des Hinweises auf die Patenterteilung: **20.02.2019**
(21) Anmeldenummer: 17000552.4
(22) Anmeldetag: 04.04.2017
(51) Int. Cl.: B29C 45/83, B29C 45/66

(54) **SCHLIESSEINHEIT EINER KUNSTSTOFFVERARBEITUNGSMASCHINE, INSBESONDERE EINER SPRITZGIESSMASCHINE**
CLOSING UNIT OF A PLASTIC PROCESSING MACHINE, IN PARTICULAR AN INJECTION MOULDING MACHINE
UNITÉ DE FERMETURE D'UNE MACHINE DE TRAITEMENT DE MATIÈRE PLASTIQUE EN PARTICULIER MACHINE DE MOULAGE PAR INJECTION

(30) Priorität: 04.05.2016 DE 102016005575
(43) Veröffentlichungstag der Anmeldung: 08.11.2017
(73) Patentinhaber: Wittmann Battenfeld GmbH, 2542 Kottingbrunn (AT)
(72) Erfinder: Lechner, Andreas, A-2563 Pottenstein (AT); Schaly, Gerhard, A-2542 Kottingbrunn (AT); Pinter, Jürgen, A-7022 Schattendorf (AT)
(74) Vertreter: Gosdin, Michael

(56) Entgegenhaltungen:
- WO-A1-2005/077639
- WO-A1-2007/036244
- AT-A4- 505 659
- JP-A- 2002 160 279

## Beschreibung

Die Erfindung betrifft eine Schließeinheit einer Kunststoffverarbeitungsmaschine, insbesondere einer Spritzgießmaschine, die mindestens eine Gelenkstelle umfasst, an der zwei Bauteile relativ zueinander um eine Achse verschwenkbar angeordnet sind, wobei die Gelenkstelle ein Wellenteil aufweist, das mit einem der Bauteile verbunden ist und das relativ zu dem anderen der Bauteile über mindestens ein Gleitlagerelement verschwenkbar gelagert ist, wobei die Gelenkstelle mindestens eine Schmiermittelzuführleitung in einem der Bauteile aufweist, die von einer außenliegenden Stelle durch das Bauteil zum Gleitlagerelement führt.

Bei gattungsgemäßen Schließeinheiten insbesondere von Spritzgießmaschinen werden häufig Kniehebelschließmechanismen eingesetzt, die eine Anzahl der genannten Gelenkstellen aufweisen. Um einen dauerhaften und verschleißarmen Betrieb zu gewährleisten, muss eine hinreichende Schmierstoffversorgung der Lagerstellen sichergestellt sein. Im Stand der Technik sind daher mannigfaltige Lösungen beschrieben, um dieses Ziel zu erreichen.

Die DE 10 2008 024 514 A1 offenbart eine Schmiervorrichtung für eine Spritzgießmaschine, bei der von den Schmierstellen eine Ablaufleitung für Schmiermittel wegführt, um verbrauchtes Schmiermittel zu entsorgen.

Eine andere Lösung ist in der DE 20 2011 105 842 U1 offenbart, bei der auf ein schmiermittelfreies Konzept abgestellt wird. Hier liegt bereits die wesentliche Zielsetzung zu Grunde, eine gattungsgemäße Schließeinheit bei einer Maschine beispielsweise für den Einsatz in einem Reinraum tauglich zu machen. Eine solche Lösung mit schmiermittelfreien Lagerstellen kann jedoch nicht bei jeder Anwendung ins Auge gefasst werden.

Bei einem solchen Anwendungsfall ist es sehr störend, wenn Schmiermittel, das zur Schmierung der Lagerstellen benötigt wird, austritt und entsorgt werden muss. Hier kann es insbesondere bei Öl-Tropfenbildung zu einer Zerstäubung von Öl kommen, was bei Reinraumanwendungen problematisch bzw. nicht akzeptabel ist.

Es sind daher auch Systeme bekannt geworden, bei denen bei Einsatz von Schmiermittel mittels einer Druckumlaufschmierung oder mittels einer drucklosen Ölrückführung zu einem Auffangbehälter der Verschmutzungsgrad der Maschine reduziert werden soll. Eine solche Lösung offenbart die WO 2005/077639 A1**,** die eine Schließeinheit der eingangs genannten Art zeigt. Um die Schmierung unter allen Betriebszuständen sicherzustellen und die Schmierwirkung der Kniehebel-Lagerstellen zu gewährleisten, dabei allerdings gleichzeitig den Leckölaustritt zu reduzieren, ist bei der genannten Lösung vorgesehen, dass die hochbelasteten Lagerstellen der Gelenke eine Umlaufschmierung aufweisen, die unabhängig von der Schmiermittelversorgung für die übrigen verlustbehafteten Lagerstellen als geschlossener Schmiermittelförderkreis ausgebildet ist. Nachteilig ist hier, dass sie einen umfassend abgedichteten Kniehebel benötigten, was sich sehr negativ auf die Kosten und auf die Baugröße der Maschine auswirkt.

Weitere ähnliche Lösungen zeigen die WO 2007/036244 A1**,** die AT 505 659 A4 und die JP 2002 160279 A**.**

Der Erfindung liegt daher die Aufgabe zugrunde, eine Schließeinheit der eingangs genannten Art so fortzubilden, dass es möglich wird, in kostengünstiger Weise noch zuverlässiger einen sauberen Betrieb der Einheit und damit der Maschine zu gewährleisten. Es soll also insbesondere eine Schließeinheit geschaffen werden, die hohe Anforderungen an einen geringen Verschmutzungsgrad erfüllt.

Die Lösung dieser Aufgabe durch die Erfindung ist in Verbindung mit den eingangs genannten Merkmalen dadurch gekennzeichnet, dass die Gelenkstelle weiter aufweist:
- mindestens einen Aufnahmeraum für verbrauchtes Schmiermittel, das im Wellenteil ausgebildet ist, wobei der Aufnahmeraum als abgeschlossener Raum mit variablem Volumen ausgebildet ist, wobei der Aufnahmeraum mindestens einen Kolben aufweist, der in einer zylindrischen Sitzfläche des Aufnahmeraums translatorisch verschieblich angeordnet ist, um bei der Bewegung des Kolbens das Volumen des Aufnahmeraums zu verändern,
- mindestens eine Schmiermittelabführleitung im Wellenteil, die vom Gleitlagerelement zum Aufnahmeraum führt.

Der Aufnahmeraum wird dabei bevorzugt durch eine Zentralbohrung im Wellenteil gebildet (die also konzentrisch zur Achse angeordnet ist). Dabei ist der Kolben vorzugsweise in einem Bohrungsabschnitt des Aufnahmeraums angeordnet ist, der einen gegenüber dem Durchmesser des sonstigen Aufnahmeraums vergrößerten Durchmesser aufweist.

Vorzugsweise ist ein Anschlagselement vorhanden, das für den Kolben einen axialen Anschlag bildet, um die Vergrößerung des Volumens des Aufnahmeraums zu begrenzen, wobei das Anschlagselement vorzugsweise an einer außenliegenden Oberfläche des Wellenteils angeordnet ist.

Der Kolben kann mit Mitteln in Verbindung stehen, die den Kolben mit einer in Verschieberichtung des Kolbens wirkenden Kraft beaufschlagen; die Kraftwirkung ist dabei diejenige, mit der versucht wird, das Volumen des Aufnahmeraums zu verkleinern. Die Mittel zur Beaufschlagung des Kolbens mit einer Kraft sind dabei nach einer Ausführungsform der Erfindung ein Federelement, insbesondere eine Schraubenfeder. Alternativ möglich ist aber auch die Ausgestaltung der Mittel in Form eines Elements zur Aufbringung von Druckluft auf eine Seite des Kolbens; der Kolben wird dann also pneumatisch mit einer Vorspannkraft beaufschlagt, die versucht, das Volumen des Aufnahmeraums zu verkleinern.

Das Gleitlagerelement umfasst bevorzugt eine hohlzylindrisch ausgebildete Lagerhülse.

Der Raum zwischen dem einen Bauteil und dem Wellenteil, in dem sich das Gleitlagerelement befindet, kann durch Dichtungselemente abgedichtet sein, wobei sich die Dichtungselemente in den beiden axialen Endbereichen des Gleitlagerelements befinden.

Die mindestens eine Schmiermittelzuführleitung im Bauteil und die mindestens eine Schmiermittelabführleitung im Wellenteil sind vorzugsweise - bezogen auf den Aufnahmeraum - in sich gegenüberliegenden Bereichen angeordnet. Hiermit wird eine vollständige Schmierung des Gleitlagerelements bei der (Nach)Schmierung gewährleistet.

In der Schmiermittelabführleitung kann ein Rückschlagventil angeordnet sein; dieses weist vorzugsweise einen Öffnungsdruck zwischen 0,2 und 2,0 bar auf. Die zuverlässige Füllung des Bereichs des Gleitlagerelements mit Schmierstoff wird hierdurch begünstigt.

Das Wellenteil und/oder der Kolben kann ein Schauglas umfassen, das einen Blick in den Aufnahmeraum gewährt. Damit kann in einfacher Weise geprüft werden, ob sich noch genügend Raum im Aufnahmeraum befindet, um verbrauchten Schmierstoff aufzunehmen.

Alternativ oder additiv kann vorgesehen sein, dass das Wellenteil einen Füllstandssensor umfasst, das den Füllungsgrad des Aufnahmeraums mit Schmiermittel erfassen kann.

Somit wird nach der vorliegenden Erfindung eine saubere Gleitlagerlösung insbesondere für eine Kniehebelschließeinheit bereitgestellt, die auch für Reinraumanwendungen zuverlässig verwendet werden kann.

Betreffend die Ausgestaltung des Gleitlagerelements wird ausdrücklich auf die DE 20 2011 105 842 U1 Bezug genommen, wo hierzu verschiedene Angaben zu finden sind, insbesondere was die Struktur des Gleitlagerelements und die zum Einsatz kommenden Materialien anbelangt.

Die Schließeinheit ist dabei insbesondere als eine solche mit Kniehebelschließmechanismus ausgebildet.

Die besonderen Vorteile der vorgeschlagenen Lösung liegen darin, dass ein sehr hoher Sauberkeitsgrad der Schließeinheit gewährleistet werden kann, ohne hierfür einen übermäßigen Kostenaufwand treiben zu müssen. So kann beispielsweise eine Maschine für Reinräume bereitgestellt werden, die sich durch einen sehr einfachen Aufbau der Kniehebellagerung auszeichnet und kostengünstig ist.

Mittels der vorgeschlagenen Lösung ist also eine absolut saubere Abdichtung aller Gelenksstellen an einer Kniehebelschließeinheit möglich. Der verbrauchte Schmierstoff wird zur einfachen Entsorgung aufgespeichert. Es muss für die komplette Einsatzdauer der Maschine keinerlei Wartung durchgeführt werden. Das komplette Schmiersystem entspricht einer Lebensdauerschmierung, wobei als besonderer Vorteil eine Erneuerung des verbrauchten Fettes gewährleistet wird. All das ist bei geringeren Kosten als bei vorbekannten Systemen möglich (beispielsweise bei Systemen mit einer drucklosen Ablaufleitung oder einer aufwendigen und somit teuren Druckumlaufschmierung).

In der Zeichnung ist ein Ausführungsbeispiel der Erfindung dargestellt. Es zeigen:
- Fig. 1: eine Schließeinheit einer Spritzgießmaschine in der Seitenansicht,
- Fig. 2: den Radialschnitt durch eine Gelenksstelle der Schließeinheit nach einer ersten Ausführungsform der Erfindung,
- Fig. 3: den Radialschnitt durch eine Gelenksstelle der Schließeinheit nach einer zweiten Ausführungsform der Erfindung und
- Fig. 4: die Einzelheit "X" gemäß Fig. 2.

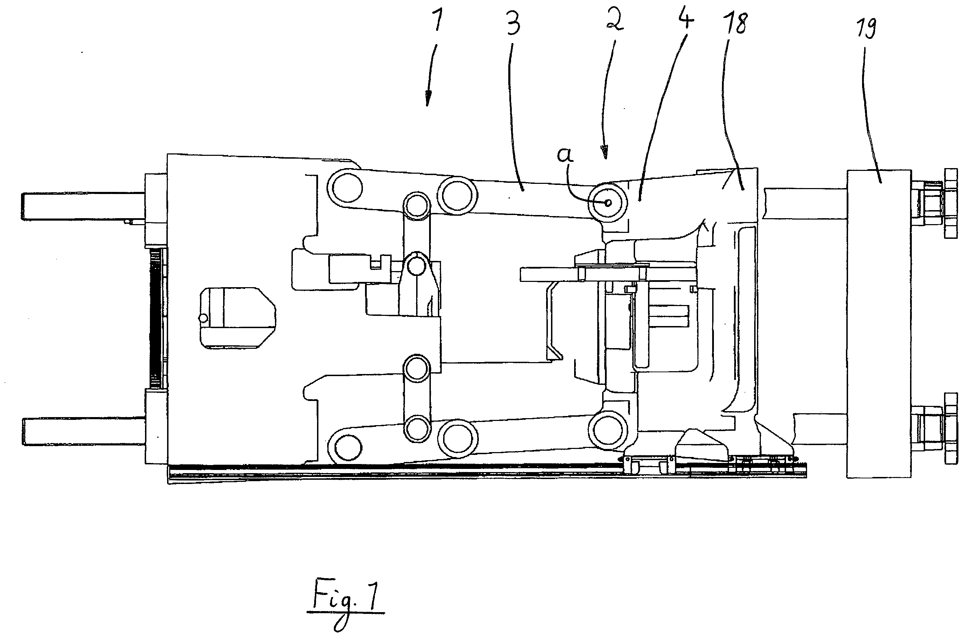

In Fig. 1 ist eine Schließeinheit 1 einer Spritzgießmaschine dargestellt, die in an sich bekannter Weise aufgebaut ist. Um eine verschiebliche Werkzeugaufspannplatte 18 relativ zu einer festen Werkzeugaufspannplatte 19 zu verschieben, ist der dargestellte Kniehebelmechanismus vorgesehen. Dieser weist in bekannter Weise eine Anzahl von Gelenkstellen 2 auf, von denen nur eine in den Figuren näher dargestellt bzw. nachfolgend diskutiert ist; allerdings kommt die vorgeschlagene Lösung grundsätzlich an allen Lager- bzw. Gelenkstellen zum Einsatz.

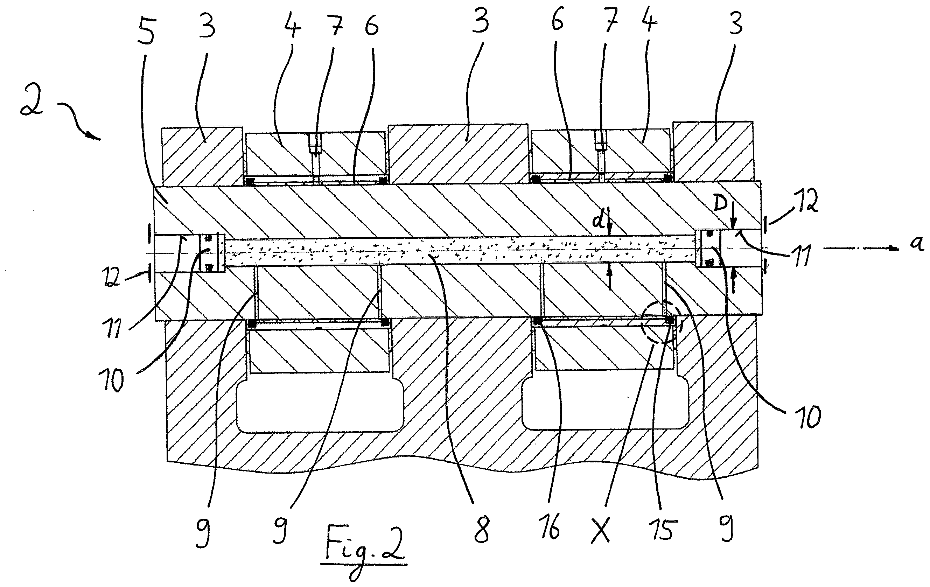

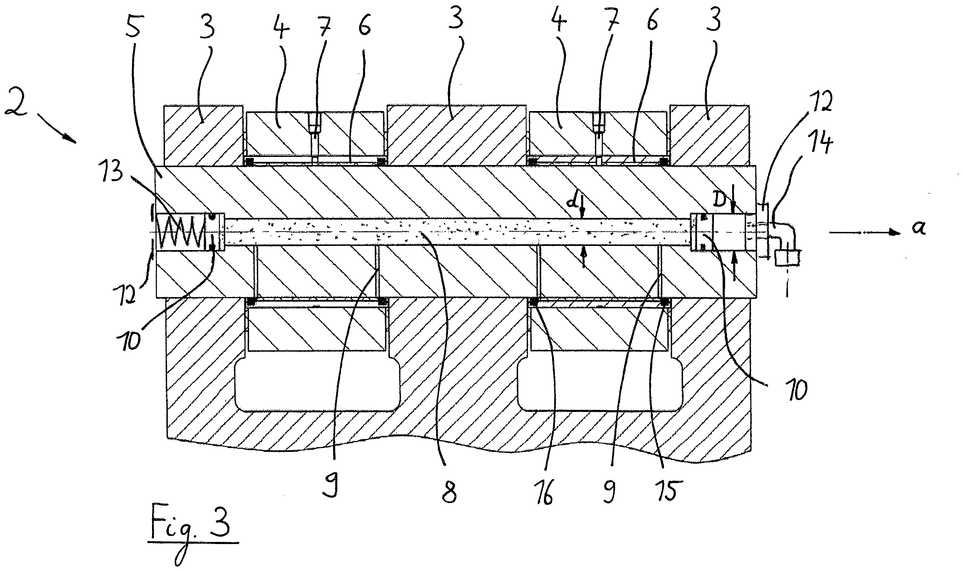

Eine Gelenkstelle erlaubt, dass zwei hier zusammentreffende Bauteile 3 und 4, d. h. Hebelteile des Kniehebelmechanismus, relativ zueinander um eine Achse a verschwenkbar sind; diese Achse steht in Fig. 1 senkrecht auf der Zeichenebene. Jede Gelenkstelle 2 umfasst ein Wellenteil 5 (s. Figuren 2 und 3), das in Aufnahmebohrungen von laschenartigen Abschnitten des einen Bauteils eingeschoben ist.

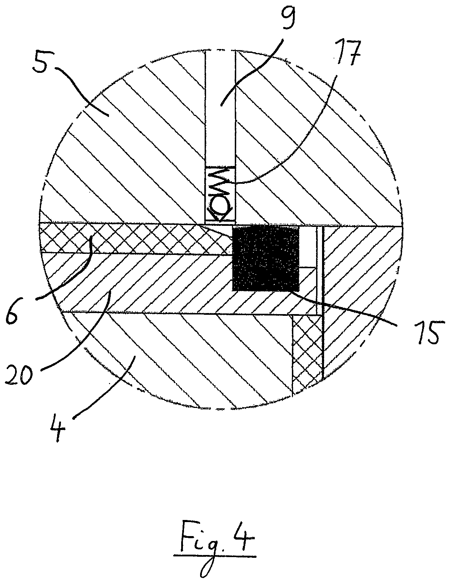

Zwischen dem Wellenteil 5 und den (laschenartigen) Abschnitten des Bauteils 4 wird, wie in den Figuren 2 und 3 gesehen werden kann, ein hohlzylindrischer Raum gebildet, in dem ein Gleitlagerelement 6 angeordnet ist. Dabei kann (siehe hierzu das Detail gemäß Figur 4) das Gleitlagerelement 6 auf einer Zwischenhülse 20 angeordnet sein, die im Bauteil 4 platziert ist. Das Gleitlagerelement 6 ist dabei hinreichend mit Schmiermittel zu versorgen, wozu die weiter dargestellte Struktur vorgesehen ist,

Im Bauteil 4 sind Schmiermittelzuführleitungen 7 eingearbeitet, die beispielsweise zum Ansetzen einer Schmierstoffpresse ausgebildet sind. Die Schmiermittelzuführleitung 7 verläuft durch das Bauteil 4 in radiale Richtung bis zum Gleitlagerelement 6, wobei durch die axial zentrische Anordnung eine gleichmäßige Versorgung des Gleitlagerelements 6 mit Schmierstoff sichergestellt ist. Vom Gleitlagerelement 6 führen pro Lagerstelle im Ausführungsbeispiel zwei Schmiermittelabführleitungen 9 weg, um aus dem Gleitlagerelement 6 verbrauchten Schmierstoff zu entsorgen. Die Schmiermittelabführleitungen 9 führen zu einem Aufnahmeraum 8, der als Zentralbohrung im Wellenteil 5 ausgebildet ist. Damit bei der Nachschmierung über die Schmiermittelzuführleitung 7 der Schmierstoff nicht den für seine Wirkung vorgesehenen Bereich verlässt, ist das Gleitlagerelement 6 in beiden axialen Endbereichen mit je einem Dichtungselement 15 bzw. 16 versehen.

Wenn neues Schmiermittel über die Schmiermittelzuführleitungen 7 zugeführt wird, wird entsprechend verbrauchtes Schmiermittel in den Aufnahmeraum 8 ausgebracht. Damit der Aufnahmeraum 8, der abgesehen von der fluidischen Verbindung mit den Schmiermittelabführleitungen 9 hermetisch abgeschlossen ist, das verbrauchtes Schmiermittel aufnehmen kann, ist vorgesehen, dass der Aufnahmeraum 8 als abgeschlossener Raum mit variablem Volumen ausgebildet ist.

In den Ausführungsbeispielen wird dies bewerkstelligt, indem der Aufnahmeraum 8, der sich durch das Wellenteil 5 erstreckt und dabei einen Durchmesser d aufweist, in einem oder in beiden axialen Endbereichen einen Bohrungsabschnitt mit vergrößertem Durchmesser D aufweist. In diesen Bereichen wird eine zylindrische Sitzfläche 11 gebildet, in die ein Kolben 10 eingesetzt ist, der sich in Achsrichtung a translatorisch bewegen kann. Der Kolben 10 ist mittels einer Kolbendichtung dicht auf der zylindrischen Sitzfläche 11 angeordnet, so dass der Aufnahmeraum 8 hermetisch abgeschlossen ist.

Über den axialen Verschiebeweg des Kolbens 10 auf der zylindrischen Sitzfläche 11 des Bohrungsabschnitts mit dem vergrößerten Durchmesser D besteht somit die Möglichkeit, dass sich das Volumen des Aufnahmeraums 8 vergrößert, um mehr verbrauchtes Schmiermittel aufzunehmen.

Der maximale Verschiebeweg des Kolbens 10 in der zylindrischen Sitzfläche 11 wird durch ein Anschlagselement 12 definiert, das in Figur 2 nur schematisch angedeutet ist.

In Figur 3 ist eine alternative Ausgestaltung zu sehen, bei der (im linken Endbereich des Aufnahmeraums 8) der Kolben 10 mit einem Mittel 13 zur Beaufschlagung des Kolbens 10 mit einer Vorspannkraft zusammenwirkt. Dieses Mittel 13 ist hier als Federelement, insbesondere als Schraubenfeder, ausgebildet und sorgt dafür, dass auf den Kolben 10 stets eine Federkraft wirkt, die den Kolben 10 nach rechts verschieben möchte und so das Volumen des Aufnahmeraums 8 zu verkleinern sucht.

Im rechten Bereich der Figur 3 ist eine alternative Lösung hierzu zu sehen, wonach die Mittel zur Beaufschlagung des Kolben 10 mit einer Kraft als Druckluftleitung 14 ausgestaltet sind, so dass bei Aufgabe eines Luftdrucks eine pneumatische Kraft auf den Kolbenboden ausgeübt wird, die analog das Volumen des Aufnahmeraums 8 zu verkleinern sucht.

Demgemäß ist also ein frei gelagerter (fliegender) Kolben 10 vorgesehen, der einen inneren (dem Aufnahmeraum 8 zugewandten) Anschlag durch eine Stufenbohrung (Durchmesserunterschied D - d) und einen äußeren Anschlag 12 aufweist. Dadurch wird bei der Nachschmierung gewährleistet, dass sich der frei fliegende Kolben 10 nach außen bewegt und sich somit das Volumen des Aufnahmeraums 8, also des Sammelbehälters, automatisch vergrößert.

Der Kolbenhub bzw. das dann entstehende zusätzliche Sammelvolumen des Aufnahmeraums 8 ist dabei so bemessen, dass eine Lebensdauerschmierung gewährleistet ist. Gleichzeitig kann durch eine optische oder elektronische Überwachung eine vollständige Befüllung des Aufnahmeraums 8, also des Sammelbehälters, angezeigt werden.

Der Vorteil der vorgeschlagenen Lösung liegt darin, dass eine vollständige Dichtheit des Aufnahmeraums 8 gewährleistet und somit ein Austritt von (verbrauchtem) Schmiermittel ausgeschlossen ist.

Die Variante nach Figur 3 sieht wie erläutert die Beaufschlagung des frei fliegenden Kolbens 10 mit einer zusätzlichen Kraft entweder über eine Feder 13 oder per Druckluft 14 vor, was zur Vorspannung des Aufnahmeraums 8 führt.

Bei der Erstinbetriebnahme der Vorrichtung bzw. Gelenksstelle 2 wird der komplette Innenbereich bzw. der Aufnahmeraum 8, die Schmiermittelabführleitungen 9 (Querbohrungen) und die komplette Lagerstelle mit Fett vorgefüllt; anschließend werden die frei fliegenden Kolben 10 auf den inneren Anschlag (also im Bereich der Stufenbohrung beim Übergang vom Durchmesser D auf den Durchmesser d) positioniert.

Der Vorteil liegt hierbei darin, dass der Schmierstoff in der Lagerstelle immer vorgespannt bleibt und somit der Schmierstoff sicher in der Lagerstelle verbleibt. Die Vergrößerung des Speichervolumens erfolgt, wie erläutert, durch Verschiebung des Kolbens 10 in der zylindrischen Sitzfläche 11.

Während bei den Ausführungsbeispielen in Figur 2 und Figur 3 in beiden axialen Endbereichen des Aufnahmeraums 8 je ein Kolben 10 angeordnet ist, kann es natürlich auch ausreichend sein, nur einen derartigen Kolben 10 vorzusehen.

In den Ausführungsbeispielen ist, wie es in Figur 4 gesehen werden kann, schließlich in der Schmiermittelabführleitung 9 ein Rückschlagventil 17 platziert. Dieses Rückschlagventil stellt verbessert sicher, dass Schmierstoff aus dem Bereich des Gleitlagerelements 6 nicht unerwünscht entweichen kann. Um den Schmierstoff also sicher in der Lagerstelle, d. h. im Gleitlagerelement 6 bis zur nächsten Nachschmierung zu halten, kann in der Schmiermittelabführleitung 9 das zusätzliche Rückschlagventil 17 eingesetzt werden, das bevorzugt auf einen Öffnungsdruck zwischen 0,2 und 2 bar eingestellt ist.

Die Erfindung stellt also auf eine Gleitlagerbüchse (Gleitlagerelement) 6 für die Gelenkstelle 2 ab, die in beiden axialen Endbereichen mit herkömmlichen Dichtungselementen 15, 16 versehen ist. Schmiermittel wird durch im Bauteil 4 bezogen auf das Gleitlagerelement 6 mittig angeordnete Schmiermittelzuführleitung 7 zugeführt, wobei als Schmierstoff sowohl Öl als auch Schmierfett infrage kommt; bevorzugt wird Fließfett eingesetzt.

Das Bauteil 3 trägt das Wellenteil 5, das mit einer mittigen großen Längsbohrung ausgestattet ist, die den Aufnahmeraum 8 bildet und somit als Speicherbehälter für den verbrauchten Schmierstoff fungiert, der durch die Schmiermittelabführleitungen 9 (Querbohrungen) aus den einzelnen Lagerstellen abgeleitet wird.

Die Funktion der Vorrichtung ist wie folgt:
Alle Lagerstellen mit jeweiligen Gleitlagerelementen 6 sind bevorzugt aneinander gereiht. Durch die Schmiermittelzuführleitung 7 wird das Gleitlagerelement 6 komplett mit Fett gefüllt. Durch die beidseitig angeordneten Dichtungselemente 15, 16 (ausgeführt als Standard-Dichtungen) wird ein Fettaustritt nach außen über die Lagerstelle hinaus verhindert. Der Schmierstoff bleibt dadurch als Dauerschmierung in der Lagerstelle, also im Gleitlagerelement 6, da das Rückschlagventil 17 ein Abfließen in den Aufnahmeraum 8, also in die Sammelbohrung, verhindern.

Um den geringen Schmierstoffverlust durch den Fettabbau bzw. die natürliche thermische Alterung ausgleichen zu können, ist eine Nachschmierung je nach Betriebsbedingungen in einem Intervall von etwa 2 bis 6 Monaten vorgesehen, so dass immer neuer Schmierstoff die ausreichende Schmierung der Lagerstelle gewährleistet.

Als Schmierstoffgeber für die Schmiermittelzuführleitung 7 kann vorgesehen sein, über eine händische Schmiervorrichtung, über eine Schmierstoffpumpe oder über einen elektrisch überwachten Schmierstoffgeber die Lagerstelle mit neuem Schmierstoff zu versorgen.

Um den Schmierstoff beim Nachschmieren durch die Schmiermittelzuführleitung 7 in die abgedichtete Lagerstelle fördern zu können, ist der mindestens eine Kolben 10 zur Erhöhung des Aufnahmevolumens des Aufnahmeraums 8 vorgesehen. Das zuverlässige Befüllen des Gleitlagerelements 6 mit Schmierstoff ist somit sichergestellt.

Die Größe bzw. das Volumen des Aufnahmeraums 8, also des Sammelbehälters, ist so bemessen, dass während einer durchschnittlichen Betriebsdauer der Maschine von ca. 15 Jahren das Volumen ausreicht, um den verbrauchten Schmierstoff aufnehmen zu können.

Durch Demontage der Anschlagselemente 12 sowie der Kolben 10 kann allerdings im gegebenen Falle auch sehr einfach der Aufnahmeraum 8 in Form der Bohrung auch bei vollständiger Befüllung mit geringem Zeitaufwand während einer standardmäßigen Wartung der Maschine gereinigt bzw. entleert werden.

Zur Visualisierung des Füllgrades des Aufnahmeraums 8 kann das Wellenteil 5, das die Längsbohrung 8 aufweist, mit einem Schauglas oder mit einem Füllstandsensor für eine elektrische Überwachung versehen werden.

### Bezugszeichenliste:

- 1: Schließeinheit
- 2: Gelenkstelle
- 3: Bauteil
- 4: Bauteil
- 5: Wellenteil
- 6: Gleitlagerelement
- 7: Schmiermittelzuführleitung
- 8: Aufnahmeraum
- 9: Schmiermittelabführleitung
- 10: Kolben
- 11: zylindrische Sitzfläche (Bohrung für Kolben)
- 12: Anschlagselement
- 13, 14: Mittel zur Beaufschlagung des Kolbens mit einer Kraft
- 13: Federelement (Schraubenfeder)
- 14: Druckluftleitung
- 15: Dichtungselement
- 16: Dichtungselement
- 17: Rückschlagventil
- 18: verschiebliche Werkzeugaufspannplatte
- 19: feste Werkzeugaufspannplatte
- 20: Zwischenhülse

- a: Achse
- d: Durchmesser des Aufnahmeraums
- D: Durchmesser der zylindrischen Sitzfläche

## Patentansprüche

1. Schließeinheit (1) einer Kunststoffverarbeitungsmaschine, insbesondere einer Spritzgießmaschine, die mindestens eine Gelenkstelle (2) umfasst, an der zwei Bauteile (3, 4) relativ zueinander um eine Achse (a) verschwenkbar angeordnet sind, wobei die Gelenkstelle (2) ein Wellenteil (5) aufweist, das mit einem der Bauteile (3) verbunden ist und das relativ zu dem anderen der Bauteile (4) über mindestens ein Gleitlagerelement (6) verschwenkbar gelagert ist, wobei die Gelenkstelle (2) mindestens eine Schmiermittelzuführleitung (7) in einem der Bauteile (4) aufweist, die von einer außenliegenden Stelle durch das Bauteil (4) zum Gleitlagerelement (6) führt,
**dadurch gekennzeichnet, dass**
die Gelenkstelle weiterhin aufweist:
- mindestens einen Aufnahmeraum (8) für verbrauchtes Schmiermittel, das im Wellenteil (5) ausgebildet ist, wobei der Aufnahmeraum (8) als abgeschlossener Raum mit variablem Volumen ausgebildet ist, wobei der Aufnahmeraum (8) mindestens einen Kolben (10) aufweist, der in einer zylindrischen Sitzfläche (11) des Aufnahmeraums (8) translatorisch verschieblich angeordnet ist, um bei der Bewegung des Kolbens (10) das Volumen des Aufnahmeraums (8) zu verändern,
- mindestens eine Schmiermittelabführleitung (9) im Wellenteil (5), die vom Gleitlagerelement (6) zum Aufnahmeraum (8) führt.

2. Schließeinheit nach Anspruch 1, **dadurch gekennzeichnet, dass** der Aufnahmeraum (8) durch eine Zentralbohrung im Wellenteil (5) gebildet wird, wobei der Kolben (10) vorzugsweise in einem Bohrungsabschnitt des Aufnahmeraums (8) angeordnet ist, der einen gegenüber dem Durchmesser (d) des sonstigen Aufnahmeraums (8) vergrößerten Durchmesser (D) aufweist.

3. Schließeinheit nach Anspruch 1 oder 2, **dadurch gekennzeichnet, dass** ein Anschlagselement (12) vorhanden ist, das für den Kolben (10) einen axialen Anschlag bildet, um die Vergrößerung des Volumens des Aufnahmeraums (8) zu begrenzen, wobei das Anschlagselement (12) vorzugsweise an einer außenliegenden Oberfläche des Wellenteils (5) angeordnet ist.

4. Schließeinheit nach einem der Ansprüche 1 bis 3, **dadurch gekennzeichnet, dass** der Kolben (10) mit Mitteln (13, 14) in Verbindung steht, die den Kolben (10) mit einer in Verschieberichtung des Kolbens (10) wirkenden Kraft beaufschlagen, wobei die Mittel (13, 14) zur Beaufschlagung des Kolbens (10) mit einer Kraft vorzugsweise ein Federelement (13), insbesondere eine Schraubenfeder, sind oder ein Element zur Aufbringung von Druckluft (14) auf eine Seite des Kolbens (10).

5. Schließeinheit nach einem der Ansprüche 1 bis 4, **dadurch gekennzeichnet, dass** das Gleitlagerelement (6) eine hohlzylindrisch ausgebildete Lagerhülse umfasst.

6. Schließeinheit nach einem der Ansprüche 1 bis 5, **dadurch gekennzeichnet, dass** der Raum zwischen dem einen Bauteil (4) und dem Wellenteil (5), in dem sich das Gleitlagerelement (6) befindet, durch Dichtungselemente (15, 16) abgedichtet ist, wobei sich die Dichtungselemente (15, 16) in den beiden axialen Endbereichen des Gleitlagerelements (6) befinden.

7. Schließeinheit nach einem der Ansprüche 1 bis 6, **dadurch gekennzeichnet, dass** die mindestens eine Schmiermittelzuführleitung (7) im Bauteil (4) und die mindestens eine Schmiermittelabführleitung (9) im Wellenteil (5) bezogen auf den Aufnahmeraum (8) in sich gegenüberliegenden Bereichen angeordnet sind.

8. Schließeinheit nach einem der Ansprüche 1 bis 7, **dadurch gekennzeichnet, dass** in der Schmiermittelabführleitung (9) ein Rückschlagventil (17) angeordnet ist, wobei das Rückschlagventil (17) vorzugsweise einen Öffnungsdruck zwischen 0,2 und 2,0 bar aufweist.

9. Schließeinheit nach einem der Ansprüche 1 bis 8, **dadurch gekennzeichnet, dass** das Wellenteil (5) und/oder der Kolben (10) ein Schauglas umfasst, das einen Blick in den Aufnahmeraum (8) gewährt und/oder dass das Wellenteil (5) einen Füllstandssensor umfasst, der den Füllungsgrad des Aufnahmeraums (8) mit Schmiermittel erfassen kann.

## Claims

1. Clamping unit (1) of a plastic processing machine, especially of an injection moulding machine, which comprises at least one articulated joint (2) at which two component parts (3, 4) are arranged which can pivot relatively to another around an axis (a), wherein the articulated joint (2) comprises a shaft part (5) which shaft part is connected with one of the component parts (3) and which is pivotable supported relatively to the other component part (4) by means of a plain bearing element (6), wherein the articulated joint (2) comprises at least one supply conduit for lubricant (7) arranged in one of the component parts (4) which guides from an outer location through the component part (4) to the plain bearing element (6),
**characterized in that**
the articulated joint further comprises:
- at least one reception space (8) for used lubricant which is shaped in the shaft part (5), wherein the reception space (8) is designed as enclosed space with a variable volume, wherein the reception space (8) comprises at least one piston (10) which is arranged translational movable in a cylindrical seat (11) of the reception space (8) to modify the volume of the reception space (8) at the motion of the piston (10),
- at least one discharge conduit for lubricant (9) in the shaft part (5) which guides from the plain bearing element (6) to the reception (8).

2. Clamping unit according to claim 1, **characterized in that** the reception space (8) is shaped by a central bore in the shaft part (5), wherein the piston (10) is preferably arranged in a bore section of the reception space (8) which has a diameter (D) which is enlarged compared with the diameter (d) of the remaining reception space (8).

3. Clamping unit according to claim 1 or 2, **characterized in that** a stop element (12) is arranged which forms an axial stop for the piston (10) to delimit the expansion of the volume of the reception space (8), wherein the stop element (12) is preferably arranged at an outer surface of the shaft part (5).

4. Clamping unit according to one of claims 1 to 3, **characterized in that** the piston (10) is connected with means (13, 14) which apply a force to the piston (10) acting in the direction of displacement of the piston (10), wherein the means (13, 14) for applying a force onto the piston (10) are preferably a spring element (13), especially a coil spring, or an element for applying of compressed air (14) onto one side of the piston (10).

5. Clamping unit according to one of claims 1 to 4, **characterized in that** the plain bearing element (6) comprises a hollow-cylindrical designed bearing sleeve.

6. Clamping unit according to one of claims 1 to 5, **characterized in that** the space between one of the component parts (4) and the shaft part (5) in which the plain bearing element (6) is arranged is sealed by means of sealing elements (15, 16), wherein the sealing elements (15, 16) are arranged in the two axial end regions of the plain bearing element (6).

7. Clamping unit according to one of claims 1 to 6, **characterized in that** the at least one supply conduit for lubricant (7) in the component part (4) and the at least one discharge conduit for lubricant (9) in the shaft part (5) are arranged on opposite regions in relation to the reception space (8).

8. Clamping unit according to one of claims 1 to 7, **characterized in that** a check valve (17) is arranged in the discharge conduit for lubricant (9), wherein the check valve (17) has preferably an opening pressure between 0.2 and 2.0 bar.

9. Clamping unit according to one of claims 1 to 8, **characterized in that** the shaft part (5) and/or the piston (10) comprise an inspection glass which allows a view into the reception space (8) and/or that the shaft part (5) comprises a fluid level sensor which can detect the lubricant fluid level in the reception space (8).

## Revendications

1. Unité de fermeture (1) d'une machine de traitement de matière plastique, en particulier d'une machine de moulage par injection, qui comprend au moins une zone d'articulation (2) au niveau de laquelle deux composants (3, 4) sont disposés de manière à pouvoir pivoter l'un par rapport à l'autre autour d'un axe (a), la zone d'articulation (2) présentant une partie d'arbre (5) qui est connectée à l'un des composants (3) et qui est supportée de manière à pouvoir pivoter par rapport à l'autre composant (4) par le biais d'au moins un élément de palier lisse (6), la zone d'articulation (2) présentant au moins une conduite d'alimentation en lubrifiant (7) dans l'un des composants (4), qui conduit depuis une zone située à l'extérieur à travers le composant (4) jusqu'à l'élément de palier lisse (6),
**caractérisée en ce que** la zone d'articulation présente en outre :
- au moins un espace de réception (8) pour le lubrifiant consommé, qui est réalisé dans la partie d'arbre (5), l'espace de réception (8) étant réalisé sous forme d'espace fermé de volume variable, l'espace de réception (8) présentant au moins un piston (10) qui est disposé de manière déplaçable en translation dans une surface de siège cylindrique (11) de l'espace de réception (8), afin de modifier le volume de l'espace de réception (8) lors du déplacement du piston (10),
- au moins une conduite d'évacuation de lubrifiant (9) dans la partie d'arbre (5), qui conduit depuis l'élément de palier lisse (6) jusqu'à l'espace de réception (8).

2. Unité de fermeture selon la revendication 1, **caractérisée en ce que** l'espace de réception (8) est formé par un alésage central dans la partie d'arbre (5), le piston (10) étant de préférence disposé dans une portion d'alésage de l'espace de réception (8) qui présente un diamètre (D) agrandi par rapport au diamètre (d) du reste de l'espace de réception (8).

3. Unité de fermeture selon la revendication 1 ou 2, **caractérisée en ce qu'**un élément de butée (12) est prévu, lequel forme une butée axiale pour le piston (10) afin de limiter l'augmentation de volume de l'espace de réception (8), l'élément de butée (12) étant de préférence disposé au niveau d'une surface de la partie d'arbre (5) située à l'extérieur.

4. Unité de fermeture selon l'une quelconque des revendications 1 à 3, **caractérisée en ce que** le piston (10) est en liaison avec des moyens (13, 14) qui sollicitent le piston (10) avec une force agissant dans la direction de déplacement du piston (10), les moyens (13, 14) pour solliciter le piston (10) avec une force étant de préférence un élément de ressort (13), en particulier un ressort hélicoïdal ou un élément pour appliquer de l'air comprimé (14) sur un côté du piston (10).

5. Unité de fermeture selon l'une quelconque des revendications 1 à 4, **caractérisée en ce que** l'élément de palier lisse (6) comprend une douille palier de réalisation cylindrique creuse.

6. Unité de fermeture selon l'une quelconque des revendications 1 à 5, **caractérisée en ce que** l'espace entre l'un des composants (4) et la partie d'arbre (5), dans lequel se trouve l'élément de palier lisse (6), est étanchéifié par des éléments d'étanchéité (15, 16), les éléments d'étanchéité (15, 16) se trouvant dans les deux régions d'extrémité axiales de l'élément de palier lisse (6).

7. Unité de fermeture selon l'une quelconque des revendications 1 à 6, **caractérisée en ce que** l'au moins une conduite d'alimentation en lubrifiant (7) dans le composant (4) et l'au moins une conduite d'évacuation de lubrifiant (9) dans la partie d'arbre (5) sont disposées dans des régions opposées l'une à l'autre par rapport à l'espace de réception (8).

8. Unité de fermeture selon l'une quelconque des revendications 1 à 7, **caractérisée en ce que** dans la conduite d'évacuation de lubrifiant (9) est disposé un clapet antiretour (17), le clapet antiretour (17) présentant de préférence une pression d'ouverture comprise entre 0,2 et 2,0 bar.

9. Unité de fermeture selon l'une quelconque des revendications 1 à 8, **caractérisée en ce que** la partie d'arbre (5) et/ou le piston (10) présentent un verre d'observation qui permet de regarder dans l'espace de réception (8) et/ou **en ce que** la partie d'arbre (5) comprend un détecteur de niveau qui peut détecter le niveau de lubrifiant dans l'espace de réception (8).
